# EUROPEAN PATENT SPECIFICATION

(11) **EP 4 152 046 B1**
(45) Date of publication and mention of the grant of the patent: **15.04.2026**
(21) Application number: 22195232.8
(22) Date of filing: 12.09.2022
(51) Int. Cl.: G01S 7/481, G01S 17/95, G01S 17/933

(54) **MULTI-FIBER OPTICAL SENSOR FOR LIGHT AIRCRAFT**
OPTISCHER MULTIFASERSENSOR FÜR LEICHTFLUGZEUG
CAPTEUR OPTIQUE MULTIFIBRE POUR AÉRONEF LÉGER

(30) Priority: 15.09.2021 US 202117475819
(43) Date of publication of application: 22.03.2023
(73) Proprietor: ROSEMOUNT AEROSPACE INC., Burnsville, MN 55306-4898 (US)
(72) Inventor: RAY, Mark, Burnsville, 55306 (US)
(74) Representative: Dehns

(56) References cited:
- EP-A1- 3 273 269
- EP-A1- 3 572 842
- EP-A2- 3 285 090
- US-A1- 2019 377 093

## Description

### BACKGROUND

Various cloud conditions can present risks to aircraft when traveling through them. If the temperature of a cloud atmosphere is below the freezing point for water, water droplets can become super-cooled liquid droplets. These super-cooled liquid droplets can then undergo a liquid-to-solid phase change upon impact with an aircraft surface. Ice accretes at different surface regions for different sizes of the super-cooled liquid droplets in the cloud atmosphere. Thus, characterizing the sizes of super-cooled water droplets in a cloud atmosphere can facilitate prediction of surface regions where ice will accrete as well as providing alerts of potentially dangerous conditions to a pilot.

Super-cooled small water droplets tend to form ice only on leading edges of an aircraft's exterior surface. Super-cooled Large water Droplets (SLDs), however, can strike the leading edge of a wing and run back past the icing protection systems, or can traverse airflow vectors and strike surfaces aft of these leading edges. Ice that forms on unprotected surface regions can severely alter the aerodynamics of the aircraft. Such ice accretion may cause aircraft stall or result in unpredictable aircraft control variation that might lead to flight issues. When in a cloud, ice can form on control surfaces and/or lift surfaces.

Not every cloud, however, has a significant SLD population. Different clouds and different atmospheric conditions may be accompanied by various water droplet size distributions, different ice/liquid ratios, etc., some of which may be entirely safe to an aircraft, while others may not be safe. Such water droplet size distributions and ice/liquid ratios may be measured as cloud metrics using various types of instruments.

Systems for sampling the atmosphere of a cloud from an aircraft have focused on larger aircraft that generate boundary layers that extend 150 mm (6 inches) or more from the aircraft skin. For example, some aircraft are equipped with Light Detection and Ranging (LIDAR) systems to measure cloud metrics. Such systems can characterize clouds that have water droplets that have a size distribution having a single mode. Either the mean droplet size or the mode droplet size can be calculated by inversion of a backscatter signal using such systems. These systems can also calculate the density of water droplets for such mono-modal distributions. Such LIDAR systems have been structured to project a beam of light beyond the boundary layer and to receive reflected light from beyond the boundary layer. To ensure efficient operation, such systems have been configured to remove backscatter generated by water droplets and ice crystals within the boundary layer. In addition, such systems can be configured to sample a large volume of a cloud atmosphere to obtain a large signal response from even a sparse distribution of water droplets in the cloud atmosphere.

In view of the increased use of light aircraft that may not generate significant boundary layers, it would be desirable to develop cloud condition measurement systems appropriate for such vehicles.

EP 3 273 269 A1 discloses an apparatus and associated methods related to sampling a large volume of a cloud atmosphere so as to obtain a large signal response from even a sparse distribution of water droplets in the cloud atmosphere. Such a volume can be probed by projecting an uncollimated optical beam into the cloud atmosphere and sampling the signal backscattered from the water droplets located within the probed volume. The uncollimated optical beam can be generated by projecting a diverging pulse of light energy from a polished end of a first optical fiber. A second optical fiber can be used to receive the optical signal backscattered from the cloud atmosphere. The second optical fiber can also have substantially the same field of view as the first optical fiber, so as to receive signals from a volume of the cloud atmosphere that is substantially commensurate with the probed volume.

### SUMMARY

According to an aspect, there is provided a multi-fiber optical sensor system as recited in claim 1.

Further, optional features are recited in each of claims 2 to 5.

According to an aspect, there is provided a method for use on a light aircraft as recited in claim 6.

Further, optional features are recited in each of claims 7 to 12.

### BRIEF DESCRIPTION OF THE DRAWINGS

FIG. 1 is a schematic view of an exemplary fiber bundle for use in a cloud condition measurement system and/or a hard target detection system;
FIG. 2A is a schematic diagram of an exemplary fiber bundle for use in a cloud condition measurement system and/or a hard target detection system;
FIG. 2B is a frontal view of an exemplary sensor head from an exemplary fiber bundle, such as that depicted in FIG. 1;
FIG. 2C is a schematic diagram depicting a plurality of detection zones;
FIG. 3 is a schematic view of an exemplary light aircraft using an exemplary cloud condition measurement system and/or an exemplary hard target detection system;
FIG. 4 is a schematic top-view of an exemplary light aircraft system using a plurality of detection zones;
FIG. 5 is an exemplary graph of the activated detection zone versus range; and
FIG. 6 is a schematic diagram of an exemplary cloud conditions metric calculator.

### DETAILED DESCRIPTION

A multi-fiber optical sensor system for light aircraft can be used to sample a volume of cloud atmosphere in the vicinity of the light aircraft or determine the proximity of a hard target to the light aircraft. For purposes of this disclosure, "light aircraft" means an aerial vehicle that either generates no boundary layer when in flight or generates a boundary layer that extends less than 150 mm (6 inches) from the skin of the aircraft. For example, if the light aircraft generates a boundary layer, the boundary layer may extend less than 125 mm (5 inches), 100 mm (4 inches), 75 mm (3 inches), 50 mm (2 inches), or 25 mm (1 inch) from the skin of the aircraft. Examples of such light aircraft include certain unmanned aerial vehicles (UAV) or other aerial vehicles that combine a relatively small fuselage with a relatively slow flight speed compared to larger aircraft. "Hard target" means any detectible target in proximity to the light aircraft, including by no limited to buildings, trees, utility poles, power lines, terrain, living creatures, and any other targets that could be a hazard if impacted by the light aircraft.

Up to now, systems for sampling the atmosphere of a cloud from an aircraft have focused on larger aircraft that generate boundary layers that extend 150 mm (6 inches) or more from the aircraft skin. As such, such systems have been structured to project a beam of light beyond the boundary layer and to receive reflected light from beyond the boundary layer. To ensure efficient operation, such systems have been configured to remove backscatter generated by water droplets and ice crystals within the boundary layer. In addition, such systems can be configured to sample a large volume of a cloud atmosphere to obtain a large signal response from even a sparse distribution of water droplets or other constituents in the cloud atmosphere.

In the system of the present disclosure and as described in more detail below, the focus is on detecting water droplets, ice crystals, and/or hard targets at short ranges, that is ranges less than 5 m (200 inches) from the aircraft skin. The short range is achieved by crossing a receiver fiber field of field with a transmitter fiber field of view. The limited sampling depth eliminates the need for range resolution, which simplifies the processing electronics and results in a smaller and lighter device. A receiver fiber and a transmitter fiber are used to project and receive light signals. The small size and weight of the receiver fiber and transmitter fiber allow them to be placed at desired locations on the light aircraft skin.

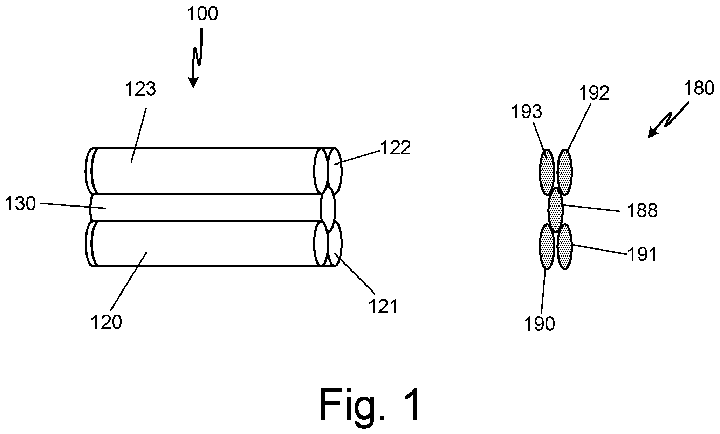

FIG. 1 is a schematic diagram of an exemplary fiber bundle for use in cloud condition measurement and/or hard target detection. Fiber bundle 100 includes projecting/receiving end 102, optical fibers 120, 121, 122, 123, 130, and lenslet array 180. The depicted configuration of optical elements shows transmitter fiber 130 bundled with receiver fibers 120, 121, 122, 123. Transmitter fiber 130 is adjacent to and aligned parallel to receiver fibers 120, 121, 122, 123. Such a configuration facilitates the spacing between receiver fibers 120, 121, 122, 123 and transmitter fiber 130. Lenslet array 180 comprises a plurality of lenses 188, 190, 191, 192, 193 within the array, each of the plurality of lenses corresponding to one optical fiber 120, 121, 122, 123, 130. Transmission lens 188 corresponds to the transmitter fiber 130, while receiver lenses 190, 191, 192, 193 on the periphery correspond to receiver fibers 120, 121, 122, 123. The transmission lens 188 of lenslet array 180 is configured to shape the transmitter fiber field of view and to give the transmitter fiber field of view a finite cross-sectional area. Similarly, the receiver lenses 190, 191, 192, 193 are configured to shape the receiver fiber field of view for their corresponding receiver fibers 120, 121, 122, 123 and to give each receiver fiber field of view a finite cross-sectional area. Each lens 188, 190, 191, 192, and 193 of the lenslet array 180 has a lens center that is nominally coincident with a center of each corresponding fiber 130, 120, 121, 122, 123.

The depicted arrangement of optical elements in FIG. 1 also shows transmitter fiber 130 having substantially the same diameter as receiver fibers 120, 121, 122, 123. Transmitter fiber 130 and receiver fibers 120, 121, 122, 123 may have any diameter suitable for a particular application. Using similarly sized fibers can provide similar fields of view for transmitter fiber 130 and receiver fibers 120, 121, 122, 123. The resulting size of fiber bundle 100 and the compact arrangement of elements makes it suitable for use on light aircraft. One can direct transmitter fiber 130 and the receiver fibers 120, 121, 122, 123 in a desired direction by bending the optical fibers 120, 121, 122, 123, and 130 so that a projecting/receiving end 102 of fiber bundle 100 is oriented such that lenslet array 180 has a normal vector directed in the desired direction for probing a cloud atmosphere or detecting a hard target. In the context of this disclosure, "normal vector" means an outward-pointing vector perpendicular to the surface of an optical medium at a given point.

The depicted arrangement of optical elements in FIG. 1 can also include linear polarizers, quarter wave plates, bandpass filters, or any additional optical components that may aid in filtering light. These additional optical components can be disposed between optical fibers 120, 121, 122, 123, 130 and lenslet array 180 or on the side of the lenslet array 180 facing outward from the optical fibers 120, 121, 122, 123, 130 (not depicted in FIG. 1). FIG. 1 is merely one embodiment of a fiber bundle within a cloud condition measurement and/or hard target detection system. As shown, fiber bundle 100 is a closely-packed pattern, but fiber bundle 100 may be arranged in a linear pattern or any other geometric pattern. Fiber bundle 100 should include at least two receiver fibers and at least one transmitter fiber but may include more than two receiver fibers and more than one transmitter fiber. In some embodiments, each receiver fiber 120, 121, 122, 123 can have a distinct receiver fiber field of view, a polarization receiving channel, and a wavelength receiving channel.

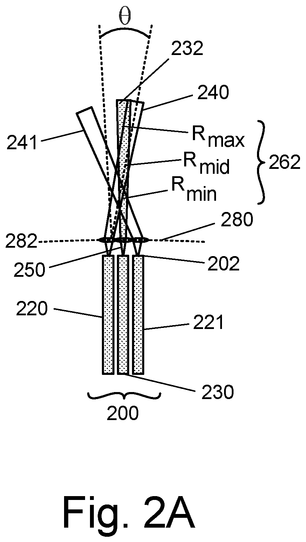

FIG. 2A is a simplified schematic diagram of an exemplary fiber bundle 200 for use in a cloud condition measurement and/or a hard target detection system that shows only one of a plurality of receiver fibers. Fiber bundle 200 includes projecting/receiving end 202, receiver fiber 220, 221, transmitter fiber 230, and lenslet array 280. FIG. 2A also depicts receiver fiber field of view 240, 241 transmitter fiber field of view 232 and projected light energy 250. The projected light energy 250 may be a continuous wave or modulated or pulsed light as may be appropriate for a particular application. Transmitter fiber 230 projects a projected light energy 250 orthogonal to lens axis 282 of the lenslet array 280 over the transmitter fiber field of view 232 such that the projected light energy 250 has a finite divergence. The transmitter fiber field of view 232 is determined by a numerical aperture of a transmission end 202 of the transmitter fiber 230. Receiver fiber 220, 221 has a receiver fiber field of view 240, 241 at an angle *θ*, which is defined as the angle between the normal vector of the center of receiver lens 272 in the lenslet array 280 and center line 275 of the receiver fiber field of view 240, 241. Angle *θ* is created by the lateral displacement of the axis of the receiver fiber 220, 221 with regard to the center of the corresponding lens of the lenslet array 280. The angle *θ* is approximately the ratio of the lateral displacement to the focal length of the lens of the lenslet array 280.

Due to receiver lens 272 causing angle *θ*, receiver field of view 240 with center line 275 crosses the center line 274 of transmitter fiber field of view 240 at distance *R_{mid}* from lens axis 282. Receiver field of view 240 first crosses transmitter fiber field of view 232 at distance *Rₘᵢₙ* from lens axis 282 and last crosses transmitter fiber field of view 232 at distance *Rₘₐₓ* from lens axis 282. The range of detection between *Rₘᵢₙ* and *Rₘₐₓ* defines the boundary of detection zone 262. The relative locations of *Rₘᵢₙ, R_{mid},* and *Rₘₐₓ* are determined by the width of the receiver field of view 240, which in turn is determined by the receiver fiber 220, 221 diameter and the focal lengths of the lens in the lenslet array 280.

FIG. 2A only depicts one receiver fiber 220, 221 of the plurality of receiver fibers that make up a fiber bundle to show a simplified schematic diagram. As discussed with regard to FIG. 1, each fiber bundle has a plurality of receiver fibers and at least one transmitter fiber. For example, fiber bundle 100 in FIG. 1 comprises four receiver fibers 120, 121, 122, 123 with one transmitter fiber 130. Each of the plurality of receiver fibers 120, 121, 122, 123 has a corresponding unique receiver fiber field of view, with a corresponding unique angle *θ*, corresponding to a unique detection zone.

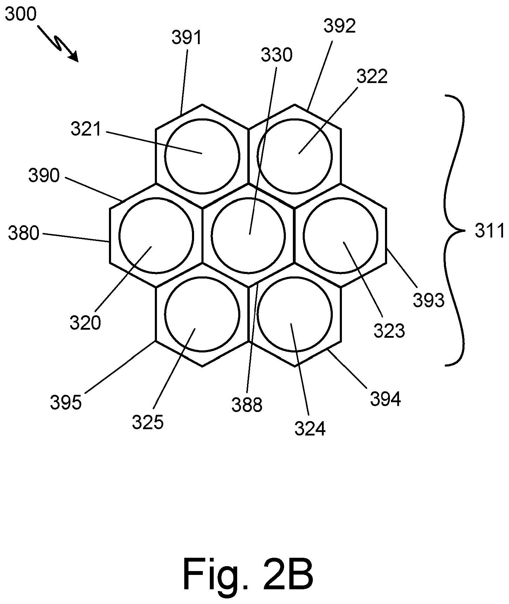

FIG. 2B is a frontal view of an exemplary sensor head 311 from fiber bundle 300. Sensor head 311 includes receiver fibers 320, 321, 322, 323, 324, 325, and transmitter fiber 330 with a plurality of lenses from lenslet array 380. In this embodiment, lenslet 380 has a structure formed from a close packed array of lenses, with a transmission lens 388 in the center, and receiver lenses 390, 391, 392, 393, 394, 395 on the periphery for each of the respective corresponding receiver fibers 320, 321, 322, 323, 324, 325. Each of the receiver lenses 390, 391, 392, 393, 394, 395 causes a corresponding receiver fiber field of view to be oriented at a unique angle *θ*, causing the corresponding receiver fiber field of view to intersect with transmitter fiber field of view at pre-determined locations of *Rₘᵢₙ, R_{mid},* and *Rₘₐₓ* for each receiver fiber field of view.

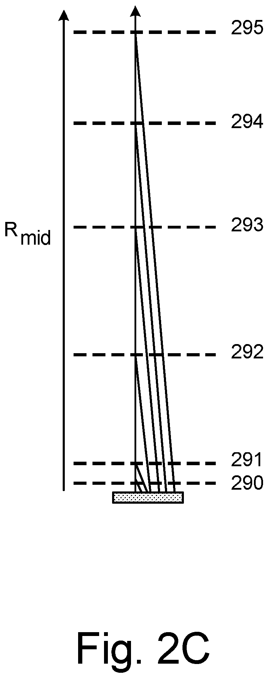

FIG. 2C is a schematic diagram of a plurality of detection zones 290, 291, 292, 293, 294, 295 related to a fiber bundle, for example fiber bundle 100 or fiber bundle 300. As shown in FIG. 1, fiber bundle 100 has a plurality of receiver fibers 120, 121, 122, 123, each of which has a corresponding receiver fiber field of view oriented at an angle *θ*. As shown in FIG. 2B, fiber bundle 300 has a plurality of receiver fibers 320, 321, 322, 323, 324, 325 each of which has a corresponding receiver fiber field of view oriented at an angle *θ*. Each receiver fiber 120, 121, 122, 123 within fiber bundle 100 or each receiver fiber 320, 321, 322, 323, 324, 325 within fiber bundle 300 corresponds to one of the plurality of detection zones 290, 291, 292, 293, 294, 295. Each of the plurality of detection zones 290, 291, 292, 293, 294, 295 is defined by a unique boundary *Rₘᵢₙ* to *Rₘₐₓ* for the respective detection zone and includes a corresponding unique distance *R_{mid}.*

The depicted arrangement permits the system to receive cloud measurement and/or hard surface detection information from a plurality of detection zones, one or more of which may overlap with at least one other of the plurality of detection zones. For example, the system can measure cloud conditions at detection zones 290, 291, 292, 293, 294, 295 simultaneously when configured for cloud condition measurement. This allows for multiple different sampling locations within the cloud atmosphere, which results in more accurate characterization of overall cloud conditions. In an embodiment where the system is configured for cloud condition measurement, each detection zone 290, 291, 292, 293, 294, 295 corresponds to a sampling location with a cloud.

When the system is used for hard target detection, the distinct ranges associated with each detection zone 290, 291, 292, 293, 294, 295 are used to calculate proximity to a hard target while using a less complex system than is typically used for hard target detection. For example, the system can detect the hard target within a particular detection zone and does not need to perform a calculation to determine the exact distance from the vehicle to the heard target. Instead, the system recognizes that the hard target is within one or more detection zones that correspond to a distance from the vehicle, providing an estimate of where the hard target is relative to the vehicle. In addition, the system can calculate a rate of closure to the hard target by detecting when a hard target enters a detection zone corresponding to a specific receiver field of view at *Rₘₐₓ* and exits the receiver field of view at *Rₘᵢₙ*. Because the distance between the specific *Rₘₐₓ* and *Rₘᵢₙ* is known, the time elapsed between a hard target transiting from *Rₘₐₓ* and *Rₘᵢₙ* can be used to calculate the rate of closure.

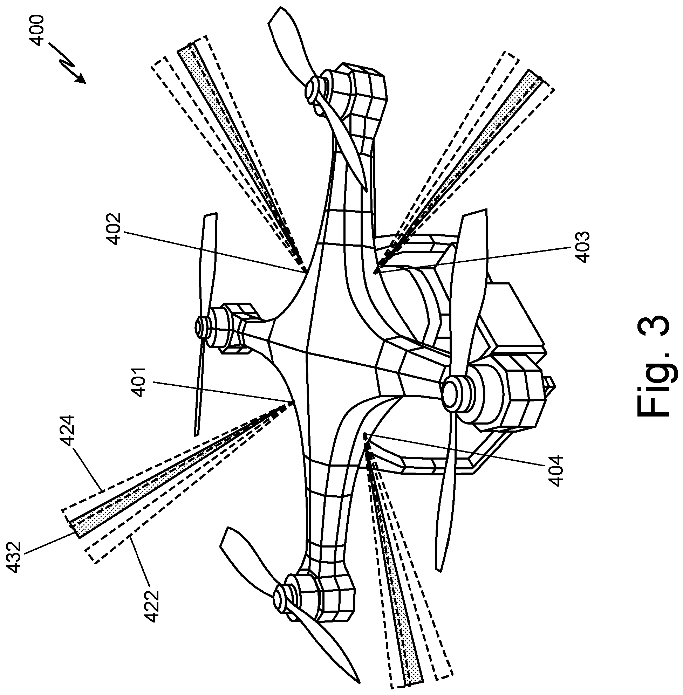

FIG. 3 is a schematic view of an exemplary light aircraft 400 using an exemplary cloud condition measurement and/or hard surface detection system to measure various metrics of a cloud in the path of the aircraft. Light aircraft 400 is equipped with four sensor systems 401, 402, 403, 404 that each perform cloud condition measurement and/or hard target detection. Each sensor system 401, 402, 403, 304 includes a fiber bundle and lenslet array (both not shown) consistent with fiber bunder 100 or fiber bundle 300 as previously described and projects light energy over a transmitter fiber field of view 432, a first receiver field of view 422, and a second receiver fiber field of view 424.

The compact size and weight of the sensor systems 401, 402, 403, 404 allow for many systems to be placed at desirable locations on the skin of light aircraft 400. As a result, multiple sensor systems can be placed throughout light aircraft 400 and configured so detection zones surround the light aircraft 400 in multiple directions.

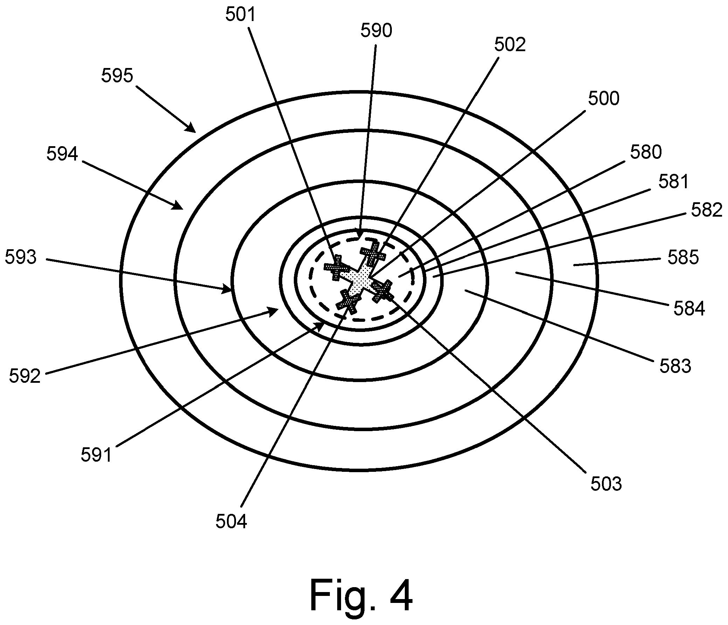

FIG. 4 is a schematic top view of an exemplary light aircraft 500 using a plurality of detection zones. Light aircraft 500 has four exemplary sensor systems 501, 502, 503, and 504 and a plurality of detection zones 590, 591, 592, 593, 594, 595 that surround light aircraft 500 circumferentially. Each of the plurality of detection zones 590, 591, 592, 593, 594, 595 has a corresponding distance *R_{mid}* 580, 581, 582, 583, 584, 585. While FIG. 4 does not show regions of detection zone 590, 591, 592, 593, 594, 595 overlap, such overlap can be configured as desired for a particular application. The positioning of sensor systems 501, 502, 503, and 504 in FIG. 4 allows for measurement of cloud conditions and/or hard target detection surrounding light aircraft 500. FIG. 4 is merely one embodiment of many possible embodiments. Any desired number sensor systems can be placed in a variety of locations on light aircraft 500 as is suitable for a particular application.

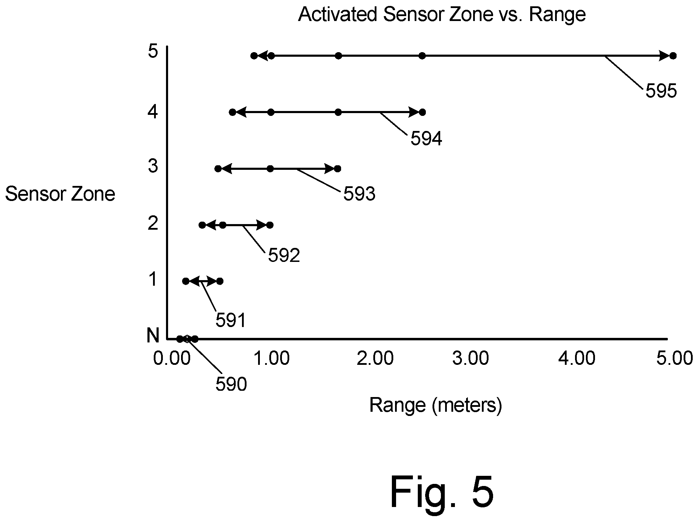

FIG. 5 is an exemplary graph of the detection zones 590, 591, 592, 593, 594, 595 of FIG. 4 versus range. The range of each detection zone 590, 591, 592, 593, 594, 595 is measured by the distance between *Rₘᵢₙ* to *Rₘₐₓ* of the respective receiver. At least one of the detection zones 590, 591, 592, 593, 594, 595 overlaps with at least one other detection zone 590, 591, 592, 593, 594, 595, which allows for more accurate cloud measurement and hard target detection. The detection zone 590, labeled N, is a "near-field" zone intended to detect objects extremely close to light aircraft 500. The primary purpose of the near-field zone to detect hard targets before flight that are too close to light aircraft 500 for safe operation.

As light aircraft 500 approaches a hard target, the detection zones 590, 591, 592, 593, 594, 595 activate when the hard target enters the range of the detection zone 590, 591, 592, 593, 594, 595. For example, when a hard target enters within 5.00 m (15 feet) of light aircraft 500, detection zone 595 becomes active. Detection zone 595 stays active until the hard target exits the range of detection zone 595, either at 1.00 m (3 feet) or at 5.00 m (15 feet). The same process applies to each of the detection zones 590, 591, 592, 593, 594, 595.

Using detection zones 590, 591, 592, 593, 594, 595 with overlapping ranges can provide an accurate estimate of the proximity of light aircraft 500 to a hard target. For example, if detection zones 595 and 594 are active, but detection zone 593 is inactive, the light aircraft 500 is between 1.80 m (x feet) and 2.30 m (x feet) from the hard target. The system of activation and deactivation allows for a Boolean computation process that requires far less complexity than traditional hard target detection systems.

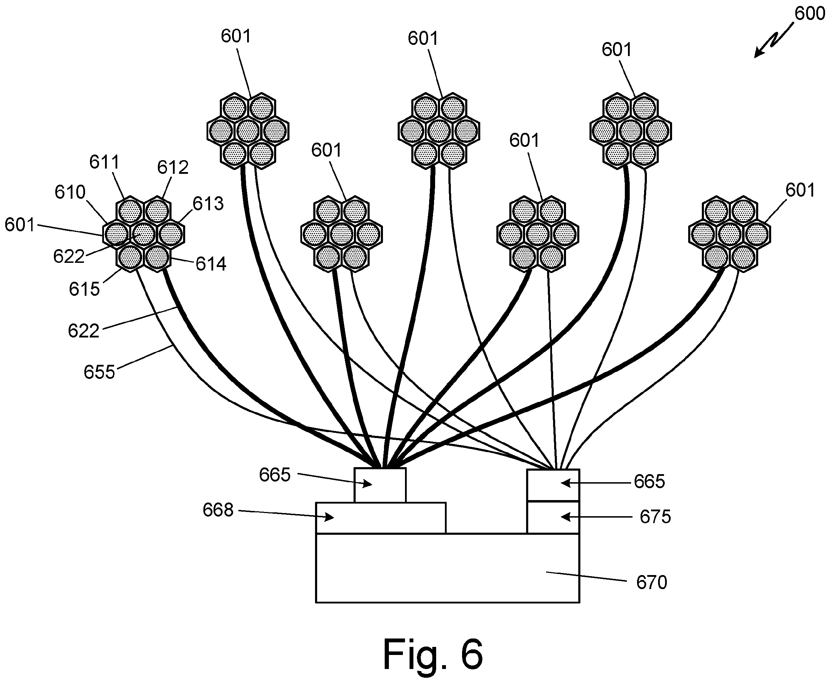

FIG. 6 is a schematic diagram of an exemplary sensor system. Sensor system 600 includes a plurality of sensor heads 601, each of the sensor heads including receiver fibers 610, 611, 612, 613, 614, 615; and transmitter fiber 622. The receiver fibers of each of the plurality of sensor heads are bundled into detector fiber bundles 655, the detector fiber bundles 655 connected to microelectromechanical systems (MEMS) switches or fiber couplers 665 (referred to as MEMS switches 665 for simplicity), which further connect to a photodiode array 668 and processor 670. Transmitter fibers 622 connect to MEMS switches 665, which further connect to a light source 675 and processor 670.

Processor 670 sends a command signal to the light source 675 to generate light energy, which may be a continuous wave or modulated or pulsed depending on the light energy that would be appropriate for a particular application. In response to the command signal, light source 675 generates light energy that travels through transmitter fiber 622 and is projected as projected light energy through each sensor head 601. Light source 675 may be a laser diode, a light emitting diode or other low intensity light sources as may be appropriate in view of the available power source and intensity of the light energy that is required for a particular application.

Processor 670 waits to receive backscatter signals indicative of cloud conditions (e.g., the presence of water droplets or ice particles) or the presence of a hard target within a detection zone of one or more receiver fibers 610, 611, 612, 613, 614, 615 of each sensor head 601. The received backscatter signals can be filtered based on polarization or wavelength of light emitted by light source 675 to remove background signals and are directed from a receiving end of receiver fibers 610, 611, 612, 613, 614, 615 through MEMS switches 665 to photodiode array 668. Photodiode array 668 converts the received backscatter signals into electrical signals that are sent to processor 670. Photodiode array 668 may configured to include a detector threshold, which is a threshold of light intensity of the received portion of the projected light energy reflecting off super-cooled liquid droplets in a cloud or a hard target received by one or more of the receiver fibers within the respective receiver fiber field of view. When the intensity of the received portion of the projected light energy exceeds the detector threshold, the respective detection zone is activated.

Processor 670 analyzes the electrical signals from photodiode array 668 and preforms cloud condition measurement and/or hard target detection depending on the programming of processor 670. For example, processor 670 can be configured to implement functionality and/or process instructions for execution within a cloud conditions metric calculator (not shown) based on known methods, including those disclosed in U.S. Patent 7,986,408 to Ray et al., titled "Apparatus and Method for In-Flight Detection of Airborne Water Droplets and Ice Crystals," the entire disclosure of which is hereby incorporated by reference, and U.S. Patent Application 15/216,398 by Ray et al, titled "Multi-Fiber Optical Sensor for Icing," the entire disclosure of which is hereby incorporated by reference. Alternately, processor 670 can be configured to process instructions to implement the method of hard target detection as described in the present application (particularly with regard to FIGs. 4 and 5). When configured for cloud condition measurements, the processor 670 can be configured to calculate a super-cooled large droplet sized based on a detected portion of the projected light received by the plurality of receiver fibers.

Regardless of the function for which processor 670 is configured, processor 670 can be capable of processing instructions stored in various memory and/or storage devices (not shown). Examples of processor 670 can include any one or more of a microprocessor, a controller, a digital signal processor (DSP), an application specific integrated circuit (ASIC), a field-programmable gate array (FPGA), or other equivalent discrete or integrated logic circuitry. Suitable memory, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory suitable for use with the present system is a temporary memory, meaning that a primary purpose of such memory is not long-term storage. The memory, in some examples, is described as volatile memory, meaning that memory does not maintain stored contents when power to the system is turned off. Examples of volatile memories can include random access memories (RAM), dynamic random access memories (DRAM), static random access memories (SRAM), and other forms of volatile memories. In some examples, the memory is used to store program instructions for execution by processor 670. The memory, in one example, is used by software or applications running on processor 670 to temporarily store information during program execution.

In some examples, the memory can also include one or more computer-readable storage media. The memory can be configured to store larger amounts of information than volatile memory. Such memory can further be configured for long-term storage of information. In some examples, the memory includes non-volatile storage elements. Examples of such non-volatile storage elements can include magnetic hard discs, optical discs, flash memories, or forms of electrically programmable memories (EPROM) or electrically erasable and programmable (EEPROM) memories.

Processor 670 can generate a communication signal based on calculated cloud metrics and/or hard target detection and can send the communication signal to various light aircraft 400 systems for further processing. Such further processing can include altering the flight path of the light aircraft or taking other action by the light aircraft in view of the calculated cloud metrics and/or hard target detection. Processor 670 can then continue to operate the light source 675 to continue the detection.

Processor 670 can communicate with other systems of the light aircraft through an input/output interface, which can also include a communications module. In one example, a suitable input/output interface uses a communications module to communicate with external devices via one or more networks, such as one or more wireless or wired networks or both. The communications module can be a network interface card, such as an Ethernet card, an optical transceiver, a radio frequency transceiver, or any other type of device that can send and receive information. Other examples of such network interfaces can include Bluetooth, 3G, 4G, and Wi-Fi radio computing devices as well as Universal Serial Bus (USB). In some embodiments, communication with the aircraft can be performed via a communications bus, such as, for example, an Aeronautical Radio, Incorporated (ARINC) standard communications protocol. In an exemplary embodiment, aircraft communication with the aircraft can be performed via a communications bus, such as, for example, a Controller Area Network (CAN) bus.

The following are non-exclusive descriptions of possible embodiments of the present invention.

A multi-fiber optical sensor system comprising: a light source configured to generate light energy; a transmitter fiber configured to receive the light energy from the light source and to project a projected light energy out of a projecting end of the transmitter fiber over a transmitter fiber field of view; a plurality of receiver fibers, wherein each of the plurality of receiver fibers has a receiving end aligned proximate and substantially parallel to the projecting end of the transmitter fiber and is configured to receive a received portion of the projected light energy reflected from a target within a receiver field of view; a lenslet array configured to shape the transmitter fiber field of view and give the transmitter field of view a finite cross-sectional area, wherein the lenslet array comprises a plurality of lens corresponding to the transmitter fiber and each of the plurality of receiver fibers and is further configured to shape the receiver fiber field of view for each of the plurality of receiver fibers and give the receiver fiber field of view for each of the plurality of receiver fibers a finite cross-sectional area; and a detector configured to detect the portion of the projected light energy received by each of the plurality of receiver fibers. The receiver fiber field of view for each of the plurality of receiver fibers crosses the transmitter fiber field of view between a first crossing point at a distance *Rₘᵢₙ* from a lens axis and a last crossing point at a distance *Rₘₐₓ* from the lens axis, wherein there is a center crossing point *R_{mid}* at a point where a centerline of the receiver fiber field of view for each of the plurality of receiver fibers crosses a centerline of the transmitter fiber field of view. The range between *Rₘᵢₙ* and *Rₘₐₓ* for each of the plurality of receiver fibers defines a detection zone such that each of the plurality of receiver fibers has a unique detection zone.

The multi-fiber optical sensor system of the preceding paragraph can optionally include, additionally and/or alternatively, any one or more of the following features, configurations and/or additional components:

The transmitter fiber and the plurality of receiver fibers are bundled into a fiber bundle, wherein the lenslet array is positioned in front of a projecting/receiving end of the fiber bundle and each lens the lenslet array has a lens center that is nominally coincident with a center of a fiber end face corresponding to the lens.

Each of the plurality of receiver fibers can provide a distinct field of view, a polarization receiving channel, and a wavelength receiving channel.

The light source is a laser diode, light emitting diode, or any other light source.

The target is a hard target and the multi-fiber optical sensor system further comprises a processor configured to determine a proximity of the hard target to the light aircraft based on the received portion of the projected light energy.

The target is one or more constituents of a cloud atmosphere, the unique detection zone for each of the plurality of receiver fibers corresponds to a sampling location within the cloud atmosphere, and the multi-fiber optical sensor system further comprises a processor configured to determine conditions of the cloud atmosphere, including a super-cooled large droplet size present in the cloud atmosphere, based on the received portion of the projected light energy.

The light source is a laser diode, light emitting diode, or any other light source, each of the plurality of receiver fibers can provide a distinct field of view, a polarization receiving channel, and a wavelength receiving channel, the transmitter fiber and the plurality of receiver fibers are bundled into a fiber bundle, the lenslet array is positioned in front of a projecting/receiving end of the fiber bundle and each lens the lenslet array has a lens center that is nominally coincident with a center of a fiber end face corresponding to the lens.

The following are non-exclusive descriptions of possible embodiments of the present invention:

A method for use on a light aircraft for detecting a hard target, the method comprising: generating, by a light source, light energy; projecting the light energy through a transmitter fiber over a transmitter fiber field of view, wherein a projected light energy has a finite divergence; receiving, within a receiver fiber field of view corresponding to at least one of a plurality of receiver fibers, a received portion of the projected light energy reflected by the hard target; detecting, by a detector, the received portion of the projected light energy; and determining, by a processor, a proximity of the hard target to the light aircraft based upon the received portion of the projected light energy. The receiver fiber field of view for each of the plurality of receiver fibers crosses the transmitter fiber field of view between a first crossing point at a distance *Rₘᵢₙ* from a lens axis and a last crossing point at a distance *Rₘₐₓ* from the lens axis, wherein there is a center crossing point *R_{mid}* at a point where a centerline of the receiver fiber field of view for each of the plurality of receiver fibers crosses a centerline of the transmitter fiber field of view. The range between *Rₘᵢₙ* and *Rₘₐₓ* for each of the plurality of receiver fibers defines a detection zone such that each of the plurality of receiver fibers has a unique detection zone.

The method of the preceding paragraph can optionally include, additionally and/or alternatively, any one or more of the following features, configurations, and/or additional components:
The distances Rmin, Rmid, and Rmax from a lens axis corresponding to each of the plurality of receiver fibers are known and stored in the processor such that when a hard target is detected within a detection zone corresponding to any of the plurality of receiver fibers, the processor is configured to use the stored distances Rmin, Rmid, and Rmax to determine proximity and/or rate of closure between the hard target and the light aircraft.

A detector threshold, wherein when the intensity of the received portion of the projected light energy exceeds the detector threshold, the respective detection zone is activated.

At least one of the plurality of detection zones overlaps with at least one other of the plurality of detection zones.

The processor is configured to determine proximity of the hard target to the light aircraft by determining which detection zones are active and inactive and using the stored distances Rmin, Rmid, and Rmax to estimate a range from the light aircraft to the hard target.

A rate of closure of the hard target to the light aircraft is determined by measuring the time at which an approaching hard target enters an active detection zone at *Rₘₐₓ* to the time at which the approaching hard target exits the active detection zone at *Rₘᵢₙ*.

Each of the plurality of receiver fibers can provide a distinct field of view, a polarization receiving channel, and a wavelength receiving channel.

The light source is a laser diode, light emitting diode, or any other light source.

The following are non-exclusive descriptions of possible embodiments of the present invention:

A method for measuring cloud conditions for use on a light aircraft, the method comprising: generating, by a light source, light energy; projecting the light energy through a transmitter fiber over a transmitter fiber field of view, wherein a projected light energy has a finite divergence; receiving, within a receiver fiber field of view corresponding to at least one of a plurality of receiver fibers, a received portion of the projected light energy backscattered by a cloud atmosphere; detecting, by a detector, the received portion of the projected light energy; and determining, by a processor, based upon the received portion of the projected light energy, conditions of the cloud atmosphere including a super-cooled large droplet size present in the cloud atmosphere. The receiver fiber field of view for each of the plurality of receiver fibers crosses the transmitter fiber field of view between a first crossing point at a distance *Rₘᵢₙ* from a lens axis and a last crossing point at a distance *Rₘₐₓ* from the lens axis, wherein there is a center crossing point *R_{mid}* at a point where a centerline of the receiver fiber field of view for each of the plurality of receiver fibers crosses a centerline of the transmitter fiber field of view. The range between Rₘᵢₙ and *Rₘₐₓ* for each of the plurality of receiver fibers defines a detection zone such that each of the plurality of receiver fibers has a unique detection zone.

The method of the preceding paragraph can optionally include, additionally and/or alternatively, any one or more of the following features, configurations, and/or additional components:

A detector threshold, wherein when the intensity of the received portion of the projected light energy exceeds the detector threshold, the respective detection zone is activated.

Each of the plurality of receiver fibers can provide a distinct field of view, a polarization receiving channel, and a wavelength receiving channel.

The light source is a laser diode, light emitting diode, or any other light source.

## Claims

1. A multi-fiber optical sensor system (401, 402, 403, 404) comprising:
a light source (675) configured to generate light energy;
a transmitter fiber (230) configured to receive the light energy from the light source (675) and to project a projected light energy (250) out of a projecting end of the transmitter fiber (230) over a transmitter fiber field of view (232);
a plurality of receiver fibers, wherein each of the plurality of receiver fibers (220, 221) has a receiving end aligned proximate and substantially parallel to the projecting end of the transmitter fiber (203) and is configured to receive a received portion of the projected light energy (250) reflected from a target within a receiver field of view (240, 241);
a detector configured to detect the portion of the projected light energy received by each of the plurality of receiver fibers, and
**characterised in that** the muti-fiber optical sensor sytem (401, 402, 403, 404) is configured to be positioned on a light aircraft (400, 500) and further comprises:
a lenslet array (280) configured to shape the transmitter fiber field of view (232) and give the transmitter field of view (232) a finite cross-sectional area, wherein the lenslet array (280) comprises a plurality of lens corresponding to the transmitter fiber (230) and each of the plurality of receiver fibers and is further configured to shape the receiver fiber field of view (240, 241) for each of the plurality of receiver fibers, tilt the center of the field of view with respect to the axis of the projected light energy (250), and give the receiver fiber field of view (240, 241) for each of the plurality of receiver fibers a finite cross-sectional area that crosses with the transmitter field of view (232) less than 5 m from the light aircraft (400, 400) to enable detection of the target within the receiver field of view (240, 241), wherein the target is one or both of a hard target or one or more constituents of a cloud atmosphere; and
a processor (670) configured to determine a proximity of the hard target to the light aircraft (400, 500) based on the received portion of the projected light energy (250), wherein the processor (670) is further configured to determine conditions of the cloud atmosphere, including a super-cooled large droplet size present in the cloud atmosphere, based on the received portion of the projected light energy (250);
wherein the receiver fiber field of view (240, 241) for each of the plurality of receiver fibers crosses the transmitter fiber field of view (232) between a first crossing point at a distance *Rₘᵢₙ* from a lens axis (282) and a last crossing point at a distance *Rₘₐₓ* from the lens axis (282), wherein there is a center crossing point *R_{mid}* at a point where a centerline of the receiver fiber field of view (240, 241) for each of the plurality of receiver fibers crosses a centerline of the transmitter fiber field of view (232);
wherein the range between *Rₘᵢₙ* and *Rₘₐₓ* for each of the plurality of receiver fibers defines a detection zone (262) such that each of the plurality of receiver fibers has a unique detection zone (262).

2. The multi-fiber optical sensor system of claim 1, wherein the transmitter fiber (232) and the plurality of receiver fibers are bundled into a fiber bundle (200), wherein the lenslet array (280) is positioned in front of a projecting/receiving end (202) of the fiber bundle (280) and each lens of the lenslet array (280) has a lens center that is nominally coincident with a center of a fiber end face corresponding to the lens.

3. The multi-fiber optical sensor system of claim 1 or 2, wherein each of the plurality of receiver fibers can provide a distinct field of view, a polarization receiving channel, and a wavelength receiving channel.

4. The multi-fiber optical sensor system of claim 1, 2 or 3, wherein the light source (675) is a laser diode, light emitting diode, or any other light source.

5. The multi-fiber optical sensor system of any preceding claim, wherein the unique detection zone (262) for each of the plurality of receiver fibers corresponds to a sampling location within the cloud atmosphere.

6. A method for use on a light aircraft (400, 500), the method comprising:
generating, by a light source (675), light energy;
projecting the light energy through a transmitter fiber (230) over a transmitter fiber field of view (232), wherein a projected light energy (250) has a finite divergence;
receiving, within a receiver fiber field of view (240, 241) corresponding to at least one of a plurality of receiver fibers, a received portion of the projected light energy (250) reflected by a hard target or a cloud atmosphere;
detecting, by a detector, the received portion of the projected light energy (250), ; and
determining, by a processor (670), a proximity of the hard target to the light aircraft (400, 500) based upon the received portion of the projected light energy (250) and conditions of the cloud atmosphere including a super-cooled large droplet size present in the cloud atmosphere based upon the received portion of the projected light energy (250),
**characterised in that** a lenslet array (280) is configured to shape the transmitter fiber field of view (232) and give the transmitter field of view (232) a finite cross-sectional area, wherein the lenslet array (280) comprises a plurality of lens corresponding to the transmitter fiber (230) and each of the plurality of receiver fibers and is further configured to shape the receiver fiber field of view (240, 241) for each of the plurality of receiver fibers, tilt the center of the field of view with respect to the axis of the projected light energy (250), and give the receiver fiber field of view (240, 241) for each of the plurality of receiver fibers a finite cross-sectional area that crosses with the transmitter field of view (232) less than 5 m from the light aircraft (400, 500) to enable detection of a target within the receiver field of view (240, 241);
wherein the receiver fiber field of view (240, 241) for each of the plurality of receiver fibers crosses the transmitter fiber field of view (232) between a first crossing point at a distance *Rₘᵢₙ* from a lens axis (282) and a last crossing point at a distance *Rₘₐₓ* from the lens axis (282), wherein there is a center crossing point *R_{mid}* at a point where a centerline of the receiver fiber field of view (240, 241) for each of the plurality of receiver fibers crosses a centerline of the transmitter fiber field of view (232);
wherein the range between *Rₘᵢₙ* and *Rₘₐₓ* for each of the plurality of receiver fibers defines a detection zone (262) such that each of the plurality of receiver fibers has a unique detection zone (262).

7. The method of claim 6, wherein the distances *Rₘᵢₙ, R_{mid},* and *Rₘₐₓ* from a lens axis (282) corresponding to each of the plurality of receiver fibers are known and stored in the processor (670) such that when the hard target is detected within a detection zone (262) corresponding to any of the plurality of receiver fibers, the processor (670) is configured to use the stored distances *Rₘᵢₙ, R_{mid},* and *Rₘₐₓ* to determine proximity and/or rate of closure between the hard target and the light aircraft.

8. The method of claim 6 or 7, further comprising a detector threshold, wherein when the intensity of the received portion of the projected light energy (250) exceeds the detector threshold, the respective detection zone (262) is activated.

9. The method of claim 8, wherein at least one of the plurality of detection zones overlaps with at least one other of the plurality of detection zones.

10. The method of claim 9, wherein the processor (670) is configured to determine proximity of the hard target to the light aircraft (400, 500) by determining which detection zones are active and inactive and using the stored distances *Rₘᵢₙ, R_{mid},* and *Rₘₐₓ* to estimate a range from the light aircraft (400, 500) to the hard target.

11. The method of claim 10, wherein a rate of closure of the hard target to the light aircraft (400, 500) is determined by measuring the time at which an approaching hard target enters an active detection zone at *Rₘₐₓ* to the time at which the approaching hard target exits the active detection zone at *Rₘᵢₙ*.

12. The method of any of claims 6 to 11, wherein each of the plurality of receiver fibers can provide a distinct field of view, a polarization receiving channel, and a wavelength receiving channel.

## Patentansprüche

1. Mehrfaser-Optiksensor-System (401, 402, 403, 404), umfassend:
eine Lichtquelle (675), die konfiguriert ist, um Lichtenergie zu erzeugen;
eine Senderfaser (230), die konfiguriert ist, um die Lichtenergie von der Lichtquelle (675) zu empfangen und eine projizierte Lichtenergie (250) aus einem Projektionsende der Senderfaser (230) über ein Senderfaser-Sichtfeld (232) zu projizieren;
eine Vielzahl von Empfängerfasern, wobei jede der Vielzahl von Empfängerfasern (220, 221) ein Empfangsende aufweist, das nahe und im Wesentlichen parallel zu dem Projektionsende der Senderfaser (203) ausgerichtet ist, und konfiguriert ist, um einen empfangenen Teil der projizierten Lichtenergie (250) zu empfangen, der von einem Ziel innerhalb eines Empfänger-Sichtfelds (240, 241) reflektiert wird;
einen Detektor, der konfiguriert ist, um den Teil der projizierten Lichtenergie zu detektieren, der durch jede der Vielzahl von Empfängerfasern empfangen wird, und
**dadurch gekennzeichnet, dass** das Mehrfaser-Optiksensor-System (401, 402, 403, 404) konfiguriert ist, um an einem Leichtflugzeug (400, 500) positioniert zu werden, und ferner umfasst:
ein Mikrolinsenarray (280), das konfiguriert ist, um das Senderfaser-Sichtfeld (232) zu formen und dem Sender-Sichtfeld (232) eine endliche Querschnittsfläche zu geben, wobei das Mikrolinsenarray (280) eine Vielzahl von Linsen umfasst, die der Senderfaser (230) und jeder der Vielzahl von Empfängerfasern entsprechen, und ferner konfiguriert ist, um das Empfängerfaser-Sichtfeld (240, 241) für jede der Vielzahl von Empfängerfasern zu formen, die Mitte des Sichtfelds in Bezug auf die Achse der projizierten Lichtenergie (250) zu neigen und dem Empfängerfaser-Sichtfeld (240, 241) für jede der Vielzahl von Empfängerfasern eine endliche Querschnittsfläche zu geben, die sich mit dem Sender-Sichtfeld (232) weniger als 5 m von dem Leichtflugzeug (400, 400) entfernt kreuzt, um eine Detektion des Ziels innerhalb des Empfänger-Sichtfelds (240, 241) zu ermöglichen, wobei das Ziel eines oder beides von einem harten Ziel oder einem oder mehreren Bestandteilen einer Wolkenatmosphäre ist; und
einen Prozessor (670), der konfiguriert ist, um eine Nähe des harten Ziels zu dem Leichtflugzeug (400, 500) basierend auf dem empfangenen Teil der projizierten Lichtenergie (250) zu bestimmen, wobei der Prozessor (670) ferner konfiguriert ist, um Bedingungen der Wolkenatmosphäre, einschließlich einer in der Wolkenatmosphäre vorhandenen unterkühlten großen Tropfengröße, basierend auf dem empfangenen Teil der projizierten Lichtenergie (250) zu bestimmen;
wobei das Empfängerfaser-Sichtfeld (240, 241) für jede der Vielzahl von Empfängerfasern das Senderfaser-Sichtfeld (232) zwischen einem ersten Kreuzungspunkt in einem Abstand *Rₘᵢₙ* von einer Linsenachse (282) und einem letzten Kreuzungspunkt in einem Abstand *Rₘₐₓ* von der Linsenachse (282) kreuzt, wobei es einen mittleren Kreuzungspunkt *R_{mid}* an einem Punkt gibt, an dem eine Mittellinie des Empfängerfaser-Sichtfelds (240, 241) für jede der Vielzahl von Empfängerfasern eine Mittellinie des Senderfaser-Sichtfelds (232) kreuzt;
wobei der Bereich zwischen *Rₘᵢₙ* und *Rₘₐₓ* für jede der Vielzahl von Empfängerfasern eine Detektionszone (262) derart definiert, dass jede der Vielzahl von Empfängerfasern eine eindeutige Detektionszone (262) aufweist.

2. Mehrfaser-Optiksensor-System nach Anspruch 1, wobei die Senderfaser (232) und die Vielzahl von Empfängerfasern zu einem Faserbündel (200) gebündelt sind, wobei das Mikrolinsenarray (280) vor einem Projektions-/Empfangsende (202) des Faserbündels (280) positioniert ist und jede Linse des Mikrolinsenarrays (280) eine Linsenmitte aufweist, die nominell mit einer Mitte einer Faserendfläche übereinstimmt, die der Linse entspricht.

3. Mehrfaser-Optiksensor-System nach Anspruch 1 oder 2, wobei jede der Vielzahl von Empfängerfasern ein eigenständiges Sichtfeld, einen Polarisations-Empfangskanal und einen Wellenlängen-Empfangskanal bereitstellen kann.

4. Mehrfaser-Optiksensor-System nach Anspruch 1, 2 oder 3, wobei die Lichtquelle (675) eine Laserdiode, eine Leuchtdiode oder eine beliebige andere Lichtquelle ist.

5. Mehrfaser-Optiksensor-System nach einem der vorhergehenden Ansprüche, wobei die eindeutige Detektionszone (262) für jede der Vielzahl von Empfängerfasern einem Probenahmeort innerhalb der Wolkenatmosphäre entspricht.

6. Verfahren zur Verwendung an einem Leichtflugzeug (400, 500), wobei das Verfahren umfasst:
Erzeugen von Lichtenergie durch eine Lichtquelle (675);
Projizieren der Lichtenergie durch eine Senderfaser (230) über ein Senderfaser-Sichtfeld (232), wobei eine projizierte Lichtenergie (250) eine endliche Divergenz aufweist;
Empfangen, innerhalb eines Empfängerfaser-Sichtfelds (240, 241), das mindestens einer aus einer Vielzahl von Empfängerfasern entspricht, eines empfangenen Teils der projizierten Lichtenergie (250), der durch ein hartes Ziel oder eine Wolkenatmosphäre reflektiert wird;
Detektieren, durch einen Detektor, des empfangenen Teils der projizierten Lichtenergie (250); und
Bestimmen, durch einen Prozessor (670), einer Nähe des harten Ziels zu dem Leichtflugzeug (400, 500) basierend auf dem empfangenen Teil der projizierten Lichtenergie (250) und von Bedingungen der Wolkenatmosphäre einschließlich einer in der Wolkenatmosphäre vorhandenen unterkühlten großen Tropfengröße basierend auf dem empfangenen Teil der projizierten Lichtenergie (250),
**dadurch gekennzeichnet, dass**
ein Mikrolinsenarray (280) konfiguriert ist, um das Senderfaser-Sichtfeld (232) zu formen und dem Sender-Sichtfeld (232) eine endliche Querschnittsfläche zu geben, wobei das Mikrolinsenarray (280) eine Vielzahl von Linsen umfasst, die der Senderfaser (230) und jeder der Vielzahl von Empfängerfasern entsprechen, und ferner konfiguriert ist, um das Empfängerfaser-Sichtfeld (240, 241) für jede der Vielzahl von Empfängerfasern zu formen, die Mitte des Sichtfelds in Bezug auf die Achse der projizierten Lichtenergie (250) zu neigen und dem Empfängerfaser-Sichtfeld (240, 241) für jede der Vielzahl von Empfängerfasern eine endliche Querschnittsfläche zu geben, die sich mit dem Sender-Sichtfeld (232) weniger als 5 m von dem Leichtflugzeug (400, 500) entfernt kreuzt, um eine Detektion eines Ziels innerhalb des Empfänger-Sichtfelds (240, 241) zu ermöglichen;
wobei das Empfängerfaser-Sichtfeld (240, 241) für jede der Vielzahl von Empfängerfasern das Senderfaser-Sichtfeld (232) zwischen einem ersten Kreuzungspunkt in einem Abstand *Rₘᵢₙ* von einer Linsenachse (282) und einem letzten Kreuzungspunkt in einem Abstand *Rₘₐₓ* von der Linsenachse (282) kreuzt, wobei es einen mittleren Kreuzungspunkt *R_{mid}* an einem Punkt gibt, an dem eine Mittellinie des Empfängerfaser-Sichtfelds (240, 241) für jede der Vielzahl von Empfängerfasern eine Mittellinie des Senderfaser-Sichtfelds (232) kreuzt;
wobei der Bereich zwischen *Rₘᵢₙ* und *Rₘₐₓ* für jede der Vielzahl von Empfängerfasern eine Detektionszone (262) derart definiert, dass jede der Vielzahl von Empfängerfasern eine eindeutige Detektionszone (262) aufweist.

7. Verfahren nach Anspruch 6, wobei die Abstände *Rₘᵢₙ, R_{mid}* und *Rₘₐₓ* von einer Linsenachse (282), die jeder der Vielzahl von Empfängerfasern entsprechen, bekannt und in dem Prozessor (670) gespeichert sind, so dass, wenn das harte Ziel innerhalb einer Detektionszone (262) detektiert wird, die einer beliebigen der Vielzahl von Empfängerfasern entspricht, der Prozessor (670) konfiguriert ist, um die gespeicherten Abstände *Rₘᵢₙ, R_{mid}* und *Rₘₐₓ* zu verwenden, um eine Nähe und/oder eine Annäherungsrate zwischen dem harten Ziel und dem Leichtflugzeug zu bestimmen.

8. Verfahren nach Anspruch 6 oder 7, ferner umfassend eine Detektorschwelle, wobei, wenn die Intensität des empfangenen Teils der projizierten Lichtenergie (250) die Detektorschwelle überschreitet, die jeweilige Detektionszone (262) aktiviert wird.

9. Verfahren nach Anspruch 8, wobei mindestens eine der Vielzahl von Detektionszonen mit mindestens einer anderen der Vielzahl von Detektionszonen überlappt.

10. Verfahren nach Anspruch 9, wobei der Prozessor (670) konfiguriert ist, um eine Nähe des harten Ziels zu dem Leichtflugzeug (400, 500) zu bestimmen, indem er bestimmt, welche Detektionszonen aktiv und inaktiv sind, und die gespeicherten Abstände *Rₘᵢₙ, R_{mid}* und *Rₘₐₓ* verwendet, um eine Entfernung von dem Leichtflugzeug (400, 500) zu dem harten Ziel zu schätzen.

11. Verfahren nach Anspruch 10, wobei eine Annäherungsrate des harten Ziels an das Leichtflugzeug (400, 500) bestimmt wird, indem die Zeit gemessen wird, zu der ein sich näherndes hartes Ziel in eine aktive Detektionszone bei *Rₘₐₓ* eintritt, bis zu der Zeit, zu der das sich nähernde harte Ziel die aktive Detektionszone bei *Rₘᵢₙ* verlässt.

12. Verfahren nach einem der Ansprüche 6 bis 11, wobei jede der Vielzahl von Empfängerfasern ein eigenständiges Sichtfeld, einen Polarisations-Empfangskanal und einen Wellenlängen-Empfangskanal bereitstellen kann.

## Revendications

1. Système de capteurs optiques multifibres (401, 402, 403, 404) comprenant :
une source lumineuse (675) configurée pour générer de l'énergie lumineuse ;
une fibre émettrice (230) configurée pour recevoir l'énergie lumineuse en provenance de la source lumineuse (675) et pour projeter une énergie lumineuse projetée (250) à partir d'une extrémité de projection de la fibre émettrice (230) sur un champ de vision de fibre émettrice (232) ;
une pluralité de fibres réceptrices, dans lequel chacune de la pluralité de fibres réceptrices (220, 221) a une extrémité de réception alignée à proximité et sensiblement parallèle à l'extrémité de projection de la fibre émettrice (203) et est configurée pour recevoir une partie reçue de l'énergie lumineuse projetée (250) réfléchie par une cible au sein d'un champ de vision de récepteur (240, 241) ;
un détecteur configuré pour détecter la partie de l'énergie lumineuse projetée reçue par chacune de la pluralité de fibres réceptrices, et
**caractérisé en ce que** le système de capteurs optiques multifibres (401, 402, 403, 404) est configuré pour être positionné sur un aéronef léger (400, 500) et comprend en outre :
un réseau de microlentilles (280) configuré pour former le champ de vision de fibre émettrice (232) et conférer au champ de vision d'émetteur (232) une section transversale finie, dans lequel le réseau de microlentilles (280) comprend une pluralité de lentilles correspondant à la fibre émettrice (230) et chacune de la pluralité de fibres réceptrices, et est en outre configuré pour former le champ de vision de fibre réceptrice (240, 241) pour chacune de la pluralité de fibres réceptrices, incliner le centre du champ de vision par rapport à l'axe de l'énergie lumineuse projetée (250) et conférer au champ de vision de fibre réceptrice (240, 241) pour chacune de la pluralité de fibres réceptrices une section transversale finie qui croise le champ de vision d'émetteur (232) à moins de 5 m de l'aéronef léger (400, 400) afin de permettre la détection de la cible au sein du champ de vision de récepteur (240, 241), dans lequel la cible est l'une ou les deux parmi une cible durcie ou un ou plusieurs constituants d'une atmosphère nuageuse ; et
un processeur (670) configuré pour déterminer une proximité de la cible durcie par rapport à l'aéronef léger (400, 500) sur la base de la partie reçue de l'énergie lumineuse projetée (250), dans lequel le processeur (670) est en outre configuré pour déterminer les conditions de l'atmosphère nuageuse, notamment une taille de grandes gouttelettes d'eau surfondues présentes dans l'atmosphère nuageuse, sur la base de la partie reçue de l'énergie lumineuse projetée (250) ;
dans lequel le champ de vision de fibre réceptrice (240, 241) pour chacune de la pluralité de fibres réceptrices croise le champ de vision de fibre émettrice (232) entre un premier point de croisement à une distance *Rₘᵢₙ* d'un axe de lentille (282) et un dernier point de croisement à une distance *Rₘₐₓ* de l'axe de lentille (282), dans lequel il existe un point de croisement central *R_{mid}* à un point où une ligne centrale du champ de vision de fibre réceptrice (240, 241) pour chacune de la pluralité de fibres réceptrices croise une ligne centrale du champ de vision de fibre émettrice (232) ;
dans lequel la plage entre *Rₘᵢₙ* et *Rₘₐₓ* pour chacune de la pluralité de fibres réceptrices définit une zone de détection (262) de telle sorte que chacune de la pluralité de fibres réceptrices présente une zone de détection unique (262).

2. Système de capteurs optiques multifibres selon la revendication 1, dans lequel la fibre émettrice (232) et la pluralité de fibres réceptrices sont regroupées en un faisceau de fibres (200), dans lequel le réseau de microlentilles (280) est positionné devant une extrémité de projection/réception (202) du faisceau de fibres (280) et chaque lentille du réseau de microlentilles (280) a un centre de lentille qui coïncide nominalement avec un centre d'une face d'extrémité de fibre correspondant à la lentille.

3. Système de capteurs optiques multifibres selon la revendication 1 ou 2, dans lequel chacune de la pluralité de fibres réceptrices peut fournir un champ de vision distinct, un canal de réception de polarisation et un canal de réception de longueur d'onde.

4. Système de capteurs optiques multifibres selon la revendication 1, 2 ou 3, dans lequel la source lumineuse (675) est une diode laser, une diode électroluminescente ou une quelconque autre source lumineuse.

5. Système de capteurs optiques multifibres selon une quelconque revendication précédente, dans lequel la zone de détection unique (262) pour chacune de la pluralité de fibres réceptrices correspond à un emplacement d'échantillonnage au sein de l'atmosphère nuageuse.

6. Procédé pour une utilisation sur un aéronef léger (400, 500), le procédé comprenant :
la génération d'énergie lumineuse au moyen d'une source lumineuse (675) ;
la projection de l'énergie lumineuse à travers une fibre émettrice (230) sur un champ de vision de fibre émettrice (232), dans lequel une énergie lumineuse projetée (250) présente une divergence finie ;
la réception, au sein d'un champ de vision de fibre réceptrice (240, 241) correspondant à au moins l'une de la pluralité de fibres réceptrices, d'une partie reçue de l'énergie lumineuse projetée (250) réfléchie par une cible durcie ou une atmosphère nuageuse ;
la détection, au moyen d'un détecteur, de la partie reçue de l'énergie lumineuse projetée (250) ; et
la détermination, au moyen d'un processeur (670), d'une proximité de la cible durcie par rapport à l'aéronef léger (400, 500) sur la base de la partie reçue de l'énergie lumineuse projetée (250), et des conditions de l'atmosphère nuageuse, notamment une taille de grandes gouttelettes d'eau surfondues présentes dans l'atmosphère nuageuse, sur la base de la partie reçue de l'énergie lumineuse projetée (250),
**caractérisé en ce que**
un réseau de microlentilles (280) est configuré pour former le champ de vision de fibre émettrice (232) et conférer au champ de vision d'émetteur (232) une section transversale finie, dans lequel le réseau de microlentilles (280) comprend une pluralité de lentilles correspondant à la fibre émettrice (230) et chacune de la pluralité de fibres réceptrices, et est en outre configuré pour former le champ de vision de fibre réceptrice (240, 241) pour chacune de la pluralité de fibres réceptrices, incliner le centre du champ de vision par rapport à l'axe de l'énergie lumineuse projetée (250) et conférer au champ de vision de fibre réceptrice (240, 241) pour chacune de la pluralité de fibres réceptrices une section transversale finie qui croise le champ de vision d'émetteur (232) à moins de 5 m de l'aéronef léger (400, 500) afin de permettre la détection d'une cible au sein du champ de vision de récepteur (240, 241) ;
dans lequel le champ de vision de fibre réceptrice (240, 241) pour chacune de la pluralité de fibres réceptrices croise le champ de vision de fibre émettrice (232) entre un premier point de croisement à une distance *Rₘᵢₙ* d'un axe de lentille (282) et un dernier point de croisement à une distance *Rₘₐₓ* de l'axe de lentille (282), dans lequel il existe un point de croisement central *R_{mid}* à un point où une ligne centrale du champ de vision de fibre réceptrice (240, 241) pour chacune de la pluralité de fibres réceptrices croise une ligne centrale du champ de vision de fibre émettrice (232) ;
dans lequel la plage entre *Rₘᵢₙ* et *Rₘₐₓ* pour chacune de la pluralité de fibres réceptrices définit une zone de détection (262) de telle sorte que chacune de la pluralité de fibres réceptrices présente une zone de détection unique (262).

7. Procédé selon la revendication 6, dans lequel les distances *Rₘᵢₙ, R_{mid}* et *Rₘₐₓ* à partir d'un axe de lentille (282) correspondant à chacune de la pluralité de fibres réceptrices sont connues et stockées dans le processeur (670) de telle sorte que, lorsque la cible durcie est détectée au sein d'une zone de détection (262) correspondant à l'une quelconque de la pluralité de fibres réceptrices, le processeur (670) est configuré pour utiliser les distances stockées *Rₘᵢₙ, R_{mid}* et *Rₘₐₓ* pour déterminer la proximité et/ou la vitesse de rapprochement entre la cible durcie et l'aéronef léger.

8. Procédé selon la revendication 6 ou 7, comprenant en outre un seuil de détecteur, dans lequel, lorsque l'intensité de la partie reçue de l'énergie lumineuse projetée (250) dépasse le seuil du détecteur, la zone de détection respective (262) est activée.

9. Procédé selon la revendication 8, dans lequel au moins l'une de la pluralité de zones de détection chevauche au moins une autre de la pluralité de zones de détection.

10. Procédé selon la revendication 9, dans lequel le processeur (670) est configuré pour déterminer une proximité de la cible durcie par rapport à l'aéronef léger (400, 500) en déterminant quelles zones de détection sont actives et inactives et en utilisant les distances stockées *Rₘᵢₙ, R_{mid},* et *Rₘₐₓ* pour estimer une portée de l'aéronef léger (400, 500) par rapport à la cible durcie.

11. Procédé selon la revendication 10, dans lequel une vitesse de rapprochement de la cible durcie par rapport à l'aéronef léger (400, 500) est déterminée en mesurant la durée entre le moment où une cible durcie en approche entre dans une zone de détection active à *Rₘₐₓ* et le moment où la cible durcie en approche sort de la zone de détection active à *Rₘᵢₙ*.

12. Procédé selon l'une quelconque des revendications 6 à 11, dans lequel chacune de la pluralité de fibres réceptrices peut fournir un champ de vision distinct, un canal de réception de polarisation et un canal de réception de longueur d'onde.
